(19) Europäisches Patentamt
European Patent Office
Office européen des brevets

(11) **EP 2 595 332 B1**

(12) **EUROPÄISCHE PATENTSCHRIFT**

(45) Veröffentlichungstag und Bekanntmachung des Hinweises auf die Patenterteilung:
**27.02.2019   Patentblatt 2019/09**

(51) Int Cl.:
*H04J 3/06* (2006.01)     *G01D 4/00* (2006.01)
*H02J 13/00* (2006.01)

(21) Anmeldenummer: **12192981.4**

(22) Anmeldetag: **16.11.2012**

(54) **Verfahren zur Ermittlung der Zeitdifferenz zwischen zwei in unterschiedlichen Geräten mit asynchron laufenden Timern erfassten Ereignissen**

Method for determining the time difference between two events recorded with asynchronously running timers in different devices

Procédé de détermination de la différence entre temps d'horloge entre deux événements saisis par des appareils différents avec des minuteurs au déroulement asynchrone

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.11.2011   EP 11009181**

(43) Veröffentlichungstag der Anmeldung:
**22.05.2013   Patentblatt 2013/21**

(73) Patentinhaber: **ABB AG**
**68309 Mannheim (DE)**

(72) Erfinder:
• **Baetz, Ingo**
**67433 Neustadt / Weinstrasse (DE)**
• **Bajer, Marcin**
**30-685 Kraków (PL)**
• **Oestreich, Rolf**
**68259 Mannheim (DE)**
• **Müller, Peter O.**
**69221 Dossenheim (DE)**
• **Stegmaier, Peter**
**68305 Mannheim (DE)**

(56) Entgegenhaltungen:
**US-B1- 6 236 623**

• **HANK MILLER ET AL: "Modern line current differential protection solutions", PROTECTIVE RELAY ENGINEERS, 2010 63RD ANNUAL CONFERENCE FOR, IEEE, PISCATAWAY, NJ, USA, 29. März 2010 (2010-03-29), Seiten 1-25, XP031679143, ISBN: 978-1-4244-6073-1**

**Beschreibung**

Die Erfindung betrifft ein Verfahren zur Ermittlung der Zeitdifferenz zwischen einem ersten Ereignis, das in oder von einem ersten Gerät erfasst wird, und einem zweiten Ereignis, das in oder von einem zweiten Gerät erfasst wird, wobei das erste Gerät einen ersten Timer mit einer ersten Zeitbasis hat, wobei das zweite Gerät einen zweiten Timer mit einer zweiten Zeitbasis hat, wobei der erste und der zweite Timer zueinander asynchron laufen, und wobei das erste und das zweite Gerät über eine serielle Kommunikationsverbindung miteinander verbunden sind, gemäß dem Oberbegriff des Anspruchs 1.

Die Erfindung betrifft weiter ein Verfahren zur Ermittlung des Phasenwinkels zwischen Strom und Spannung in einem Wechselstromkreis, wobei der Phasenwinkel aus der Zeitdifferenz zwischen den Nulldurchgängen des Strom- und Spannungssignals ermittelt wird, gemäß dem Oberbegriff des Anspruchs 8.

Die Erfindung betrifft weiter ein System zur Ermittlung des Phasenwinkels zwischen Strom und Spannung in einem Wechselstromkreis, gemäß Anspruch 9.

Schließlich betrifft die Erfindung ein Computerprogramm mit Programmcode zur Durchführung der Verfahrensschritte des Verfahrens zur Ermittlung der Zeitdifferenz zwischen einem ersten Ereignis, das in oder von einem ersten Gerät erfasst wird, und einem zweiten Ereignis, das in oder von einem zweiten Gerät erfasst wird, wobei das erste Gerät einen ersten Timer mit einer ersten Zeitbasis hat, wobei das zweite Gerät einen zweiten Timer mit einer zweiten Zeitbasis hat, wobei der erste und der zweite Timer zueinander asynchron laufen, und wobei das erste und das zweite Gerät über eine serielle Kommunikationsverbindung miteinander verbunden sind oder zur Durchführung des Verfahrens zur Ermittlung des Phasenwinkels zwischen Strom und Spannung in einem Wechselstromkreis, wobei der Phasenwinkel aus der Zeitdifferenz zwischen den Nulldurchgängen des Strom- und Spannungssignals ermittelt wird.

Das technische Sachgebiet der Erfindung ist die Berechung der Zeitverzögerung zwischen zwei Ereignissen, welche in zwei unabhängigen Geräten mit unterschiedlichen Zeitbasen erfasst und über eine serielle Verbindung synchronisiert werden.

In einem typischen Beispielfall wird der Phasenversatz zwischen den Strömen und den Spannungen einer 3-phasigen Asynchronmaschine erfasst und dadurch die Wirk- und Blindleistung dieser 3-phasigen Asynchronmaschine berechnet.

Die Synchronisierung von Ereignissen über eine serielle Verbindung ist ein weit verbreitetes Verfahren. Der Stand der Technik hierbei ist es, die Zeitbasen, das heißt die Uhren oder Timer, der unterschiedlichen Teilnehmer zu synchronisieren und die Zeitverzögerung von Ereignissen mittels Zeitstempelung zu berechnen.

Wegen der dazu erforderlichen Synchronisation der Zeitbasen der Timer, auch Uhren genannnt, der unterschiedlichen Teilnehmer der seriellen Busverbindung bestehen erhöhte Anforderungen an deren Taktgeber, beispielsweise die Quarze, und die Komplexität der Protokolle der seriellen Übertragung ist, je nach gewünschter Genauigkeit, sehr hoch.

Wenn man erhöhte Anforderung an die Genauigkeit und Toleranz der Taktgeber beider Geräte stellt und daher synchrone Uhren in den Timern der beiden unterschiedlichen Geräte laufen lassen will, welche einen maximalen Versatz von beispielsweise weniger als $100\mu s$ haben sollen, so benötigt man dazu hochgenaue Taktgeber. Diese sind teuer und oft nicht als preiswerte Standardkomponenten verfügbar.

Eine kostengünstigere Lösung setzt preiswerte Standardkomponenten ein. Doch diese laufen weniger stabil, so dass man die Uhren der beiden Geräte häufig neu synchronisieren müsste, wobei dann die Auslastung der seriellen Verbindung stark ansteigen würde, was zu Zeitverlusten bei der Datenübertragung führen würde und daher bisher keine reale Lösungsoption darstellt.

Es ist daher die Aufgabe der vorliegenden Erfindung, ein Verfahren zur Ermittlung der Zeitdifferenz zwischen einem ersten Ereignis, das in einem ersten Gerät erfasst wird, und einem zweiten Ereignis, das in einem zweiten Gerät erfasst wird, wobei das erste und das zweite Gerät über eine Kommunikationsverbindung miteinander verbunden sind, so zu gestalten, dass kostengünstige Standardkomponenten, insbesondere kostengünstige Standard-Taktgeber, eingesetzt werden können und gleichzeitig die zusätzliche Auslastung der seriellen Verbindung auf ein Minimum reduziert ist.

Die Aufgabe wird erfindungsgemäß gelöst durch die Merkmale des Anspruchs 1. Erfindungsgemäß also wird in dem zweiten Gerät eine erste Zeit des Auftretens des zweiten Ereignisses, bezogen auf die zweite Zeitbasis, erfasst und gespeichert, und in dem ersten Gerät wird ein Synchronisationstelegramm erzeugt, wenn in oder von dem ersten Gerät das erste Ereignis erfasst wird, und das Synchronisationstelegramm wird über die serielle Kommunikationsverbindung an das zweite Gerät gesendet, wobei in dem zweiten Gerät eine zweite Zeit des Eintreffens des Synchronisationstelegramms in dem zweiten Gerät, bezogen auf die zweite Zeitbasis, erfasst und gespeichert wird, so dass die Zeitdifferenz zwischen dem ersten und dem zweiten Ereignis aus der Differenz zwischen der zweiten Zeit und der ersten Zeit, unter Berücksichtigung der Verzögerungszeit, die zwischen dem Erzeugen des Synchronisationstelegramms in dem ersten Gerät und dem Erfassen des Eintreffens des Synchronisationstelegramms in dem zweiten Gerät entsteht, ermittelt wird.

Erfindungsgemäß werden nicht mehr die Timer der beiden unterschiedlichen Geräte synchronisiert, sondern es werden die beiden Ereignisse synchronisiert, bezogen nur noch auf eine Zeitbasis in einem der beiden Geräte. In dem erfindungsgemäßen Verfahren können daher die Teilnehmer unterschiedliche Zeitbasen haben, weshalb die Anforderung an die Taktgeber gering ist, so dass hier Standardkomponenten eingesetzt werden können.

Gemäß einer vorteilhaften Ausführungsform der Erfindung wird dem ersten Ereignis in dem ersten Gerät ein erster Ereignis-Timerwert, bezogen auf die Zeitbasis des ersten Gerätes, zugeordnet und gespeichert, dem zweiten Ereignis in dem zweiten Gerät wird ein zweiter Ereignis-Timerwert, bezogen auf die Zeitbasis des zweiten Gerätes, zugeordnet und gespeichert, so dass beide Ereignisse durch Austausch des Synchronisationstelegramms zwischen den beiden Geräten über die Kommunikationsverbindung synchronisiert werden, und wobei die Zeitdifferenz zwischen den beiden Ereignissen unter Verwendung der beiden Ereignis-Timerwerte ermittelt wird.

Gemäß einer vorteilhaften Ausführungsform der Erfindung wird bei Auftreten des ersten Ereignisses die Übertragung des Synchronisationstelegramms von dem ersten an das zweite Gerät initiiert, wobei die Laufzeit des Synchronisationstelegramms bis zu dessen Empfang in dem zweiten Gerät ermittelt wird und diese die Verzögerungszeit darstellt, wobei bei Empfang des Synchronisationstelegramms in dem zweiten Gerät der zugehörige Empfangs-Timerwert ermittelt und gespeichert wird, wobei die Zeitdifferenz zwischen den beiden Ereignissen aus der Differenz zwischen dem Empfangs-Timerwert einerseits und der Summe aus dem zweiten Ereignis-Timerwert und der Verzögerungszeit andererseits ermittelt wird.

Die Laufzeit des Synchronisationstelegramms ist weitgehend unabhängig von der Zeitbasis der beiden timer, es handelt sich dabei um eine Summe unterschiedlicher, geräte- und/oder leitungsbedingter Verzögerungszeiten, die im Prinzip bekannt sind oder die sich im Zuge des Übertragungsverfahrens als Zeitdifferenzen, also ohne Bezug zu einer bestimmten Zeitbasis, ermitteln lassen. Daher werden auch hierfür keine hochpräzisen Spezialbauteile ebenötigt.

Gemäß einer vorteilhaften Ausführungsform der Erfindung wird bei Übergabe des Synchronisationstelegramms an die Kommunikationsschnittstelle in dem ersten Gerät der erste Verzögerungs-Timerwert ermittelt, und die Verzögerungszeit wird aus der Summe des ersten Verzögerungs-Timerwerts und dem Zeitversatz aufgrund der Telegrammübertragung sowie eines weiteren Zeitversatzes aufgrund der Interrupt-Zeit der Kommunikationsschnittstelle ermittelt.

Gemäß einer vorteilhaften Ausführungsform der Erfindung wird nach dem vollständigen Empfang des Synchronisationstelegramms in dem zweiten Gerät ein Bestätigungstelegramm an das erste Gerät gesandt.

Gemäß einer vorteilhaften Ausführungsform der Erfindung schickt das erste Gerät nach dem Empfang des Bestätigungstelegramms an das zweite Gerät ein Datentelegramm, welches den ersten Ereignis-Timerwert und den zweiten Verzögerungs-Timerwert beinhaltet.

Gemäß einer vorteilhaften Ausführungsform der Erfindung wird nach dem Empfang des Datentelegramms in dem zweiten Gerät die Zeitdifferenz ermittelt wird.

Ein erfindungsgemäßes Verfahren zur Ermittlung des Phasenwinkels zwischen Strom und Spannung in einem Wechselstromkreis, wobei der Phasenwinkel aus der Zeitdifferenz zwischen den Nulldurchgängen des Strom- und Spannungssignals ermittelt wird, ist dadurch gekennzeichnet, dass das Verfahren die Verfahrensschritte des oben beschriebenen erfindungsgemäßen Verfahrens aufweist, wobei das erste Ereignis der Nulldurchgang des Stromsignals und das zweite Ereignis der Nulldurchgang des Spannungssignals ist.

Ein erfindungsgemäßes System zur Ermittlung des Phasenwinkels zwischen Strom und Spannung in einem Wechselstromkreis umfasst

- ein Strommessgerät zur Erfassung des Nulldurchgangs des Stromes,
- ein Spannungsmessgerät zur Erfassung des Nulldurchgangs der Spannung,

wobei beide Geräte durch eine serielle Schnittstelle miteinander verbunden sind, und wobei das System dazu eingerichtet ist, ein Verfahren mit den Verfahrensschritten des oben beschriebenen erfindungsgemäßen Verfahrens auszuführen, wobei das Strommessgerät dem ersten Gerät und der Stromnulldurchgang dem ersten Ereignis entspricht, und wobei das Spannungsmessgerät dem zweiten Gerät und der Spannungsnulldurchgang dem zweiten Ereignis entspricht.

Gemäß einer vorteilhaften Ausführungsform der Erfindung sind das erste Gerät zur Durchführung von dreiphasigen Stromnulldurchgangsmessungen und das zweite Gerät zur Durchführung von dreiphasigen Spannungsnulldurchgangsmessungen eingerichtet.

Die Erfindung sowie weitere vorteilhafte Ausgestaltungen und Verbesserungen der Erfindung soll im Folgenden auch unter Bezug auf die beigefügten Zeichnungen und Diagramme näher erläutert und beschrieben werden.

Es zeigen

Figur 1      schematisch ein erfindungsgemäßes System zur Ermittlung des Phasenwinkels zwischen Strom und Spannung in einem Wechselstromkreis,

Figur 2      schematisch den Verfahrensablauf eines erfindungsgemäßen Verfahrens zur Ermittlung der Zeitdifferenz zwischen einem ersten Ereignis, hier dem Nulldurchgang eines Strommesssignals, das von einem ersten Gerät, hier einem Strommessgerät, erfasst wird, und einem zweiten Ereignis, hier dem Nulldurchgang eines Spannungssignals, das von einem zweiten Gerät, hier einem Spannungsmessgerät, erfasst wird,

Figur 3    den Verfahrensablauf des erfindungsgemäßen Verfahrens in einem erweiterten Schema.

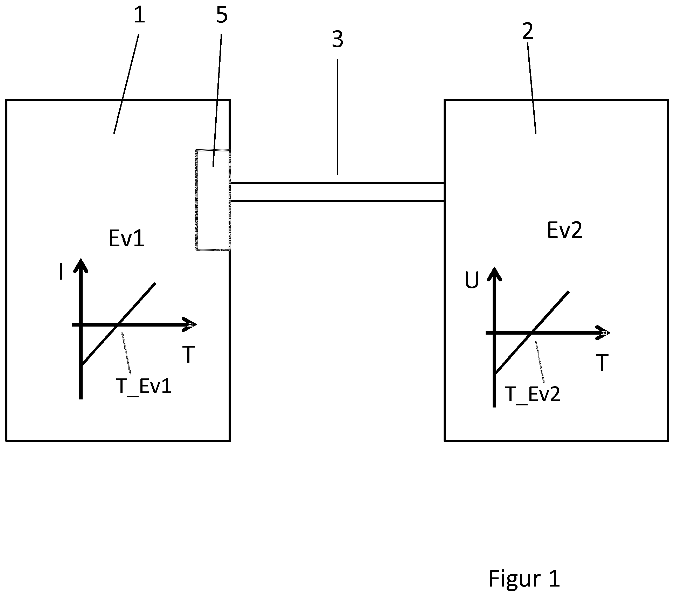

Figur 1 zeigt schematisch ein erstes Gerät 1, in oder von dem ein erstes Ereignis Ev1 erfasst wird, und ein davon räumlich getrenntes, separates, zweites Gerät 2, in oder von dem ein zweites Ereignis Ev2 erfasst wird. Als Beispiel für das erste Ereignis Ev1 ist eine zeitabhängige Strommessung gezeigt, das konkrete erste Ereignis Ev1 ist der Nulldurchgang des Strommesswertes zu einer Zeit T_Ev1. Als Beispiel für das zweite Ereignis Ev2 ist eine zeitabhängige Spannungsmessung gezeigt, das konkrete zweite Ereignis Ev2 ist der Nulldurchgang des Spannungsmesswertes zu einer Zeit T_Ev2. Die in diesem Beispiel dazu erforderliche Anschlussbeschaltung der beiden Geräte 1 und 2, also die stromführenden Phasenleitungen, sind in der Fig. 1 nicht dargestellt; wie diese anzuschließen sind, ist allerdings bekannt. Die beiden Geräte 1 und 2 sind signaltechnisch über eine serielle Kommunikationsverbindung 3 verbunden. Dies kann eine RS 485 - Verbindung sein, oder eine andere, im Prinzip bekannte, 2-Draht-Busverbindung. In dem Gerät 1 ist dabei schematisch eine Kommunikationsschnittstelle 5 dargestellt. Auch das Gerät 2 hat eine solche Kommunikationsschnittstelle. Es kann sich bei der Kommunikationsschnittstelle beispielsweise um einen im Allgemeinen als "Universal Asynchronous Receiver Transmitter", kurz UART, bezeichneten Funktionsbaustein handeln.

Das erfindungsgemäße Synchronisationsverfahren wird vorteilhaft beispielsweise eingesetzt, um die in separaten, getrennten und räumlich voneinander entfernten Geräten erfassten Nulldurchgänge von sinusförmigen Strömen und Spannungen zu synchronisieren und somit den Zeitversatz zwischen beiden Ereignissen zu ermitteln. Mit dem Zeitversatz wird dann der Phasenwinkel zwischen Spannung und Strom berechnet. Mit Hilfe des so ermittelten Phasenwinkels können dann weitere Kennwerte, wie der $\cos(\varphi)$ und die Wirk- und Scheinleistung, berechnet werden.

Die 3 phasigen Spannungsnulldurchgangsmessungen werden in einem Spannungsmessmodul, einem separaten Gerät, und die 3 phasigen Stromnulldurchgangsmessungen werden in einem weiteren, separaten Gerät durchgeführt. Bei dem Gerät, in dem die Stromnulldurchgangsmessungen durchgeführt werden, kann es sich beispielsweise um einen Universalen Motor Controller handeln, auch als UMC bezeichnet. Ein UMC ist ein elektronisches Motorschutzrelais. Ein Motorschutzrelais wird einem Elektromotor zugeordnet. Es erhält Messsignale betreffend den Motorstrom und die Motorspannung. Es umfasst Logikfunktionen, die aus den gemessenen Strom- und Spannungssignalen, deren Zeitverlauf und/oder deren Historie, bestimmte Kennwerte ermitteln, wie beispielsweise den Effektivwert der Spannung, die Frequenz, den Klirrfaktor oder ähnliche, im Prinzip bekannte Kennwerte. Anhand dieser Kennwerte kann eine Diagnose des Motors erfolgen, es können kritische Betriebszustände erkannt oder das wahrscheinliche zukünftige Eintreten kritischer Betriebszustände vorhergesagt werden, so dass geeignete Wartungs- oder Instandhaltungsmaßnahmen eingeleitet werden können. Ein solcher Motorcontroller ist beispielsweise aus der EP 2 290 776 A1 bekannt.

Ein elektronischer Motor Controller wird von der Firma ABB AG unter dem Namen UMC 100 angeboten. Der UMC 100 enthält eine Strommessvorrichtung und die genannte Auswerteelektronik. In der schematisch gezeigten Anordnung nach Figur 1 ist das erste Gerät 1 beispielsweise ein solcher Motorcontroller UMC 100. Der Motorcontroller UMC 100, erstes Gerät 1 in Figur 1, enthält keine Spannungsmessvorrichtung. Die Spannungsmessung erfolgt in einem separaten Spannungsmessmodul, dem zweiten Gerät 2 in Figur 1. Ein solches Spannungsmessmodul wird von der Firma ABB AG unter dem Namen VI15x angeboten. Beide Geräte 1, 2 sind nur durch eine serielle RS485 Schnittstelle 3 miteinander verbunden.

Es sind Motor-Controller bekannt, bei denen sowohl die Strom- als auch die Spannungsmessung zusammen in einem einzigen Gerät erfolgt. Das kann entweder ein Motorcontroller mit integrierter Strom- als auch Spannungsmessung sein, oder ein Motorcontroller ohne Messfunktion, der mit einem kombinierten Strom- und Spannungsmessgerät verbunden ist. Ein solches Kombinationsgerät als Motorcontroller ist allerdings aufwändig und teuer. Auch gibt es Anwendungen, in denen man eine der beiden Messungen, beispielsweise die Spannungsmessung, gar nicht benötigt. Bei einem Kombinationsgerät muss man aber auch in diesen Fällen die Spannungsmessfunktion mit kaufen, benutzt sie aber vielleicht gar nicht. Daher ist es wünschenswert, einen Motorcontroller mit beispielsweise nur der Strommessfunktion zu haben, und die Spannungsmessfunktion als optionale Variante in Form eines separaten Spannungsmessmoduls zur Verfügung zu stellen. Dabei ergibt sich jedoch das Problem, dass zur Ermittlung der Phasenlage von Strom und Spannung die Nulldurchgänge in dem Strommessgerät und in dem Spannungsmessgerät genau miteinander synchronisiert werden müssen. Für die Bestimmung der Phasenlage zwischen Strom und Spannung ist eine Synchronisierung ausreichend, die mit einer Genauigkeit von < 100µs erfolgt.

In im Stand der Technik bekannten Kommunikationsverbindungssystemen, wie beispielsweise dem Ethernet, werden die Uhren der beiden Geräte miteinander synchronisiert. Die Ereignisse in jedem der Geräte 1, 2 werden dann bezogen auf die jeweilige Zeitbasis des Gerätes erfasst, und da die Timer der Geräte genau miteinander synchronisiert sind, sind auch die Zeiten der jeweiligen Ereignisse genau miteinander synchronisiert. Eine Uhrensynchronisation wie in Ethernet-Systemen bekannt kann Genauigkeiten von <1 µs erreichen. Eine Ethernet-Verbindung ist jedoch aufwändig, und für eine Anwendung im Zusammenhang mit der Synchronisierung eines Spannungsmessmoduls mit einem Motorcontroller aus ökonomischen Gründen nicht zu rechtfertigen, auch da ihre Genauigkeit wesentlich höher ist als hier erforderlich. Es ist somit das Problem zu lösen, ein Spannungsmessmodul mit einem Strommessmodul eines Motorcontrollers unter Verwendung einer einfachen seriellen Kommunikationsschnittstelle zu verbinden und dabei auf einfache und kostengünstige Weise zu gewährleisten, dass die Strom- und Spannungsnulldurchgänge mit der erforderlichen Genauigkeit miteinander synchronisiert werden. Das erfindungsgemäße Verfahren zur Ermittlung der Zeitdifferenz zwischen dem ersten Ereignis Ev1 in dem ersten Gerät und dem zweiten Ereignis Ev2 in dem zweiten Gerät löst dieses Problem.

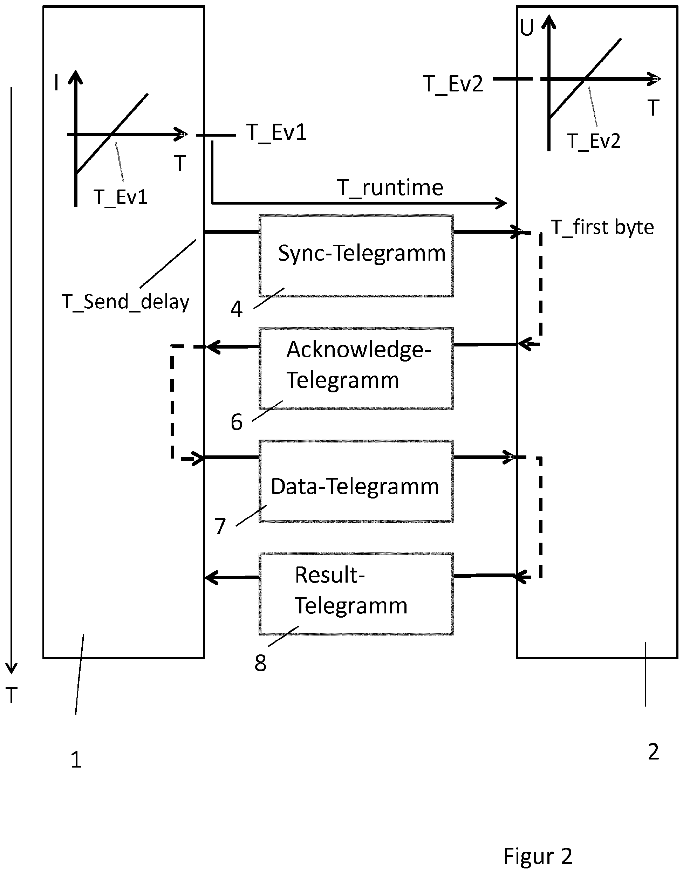

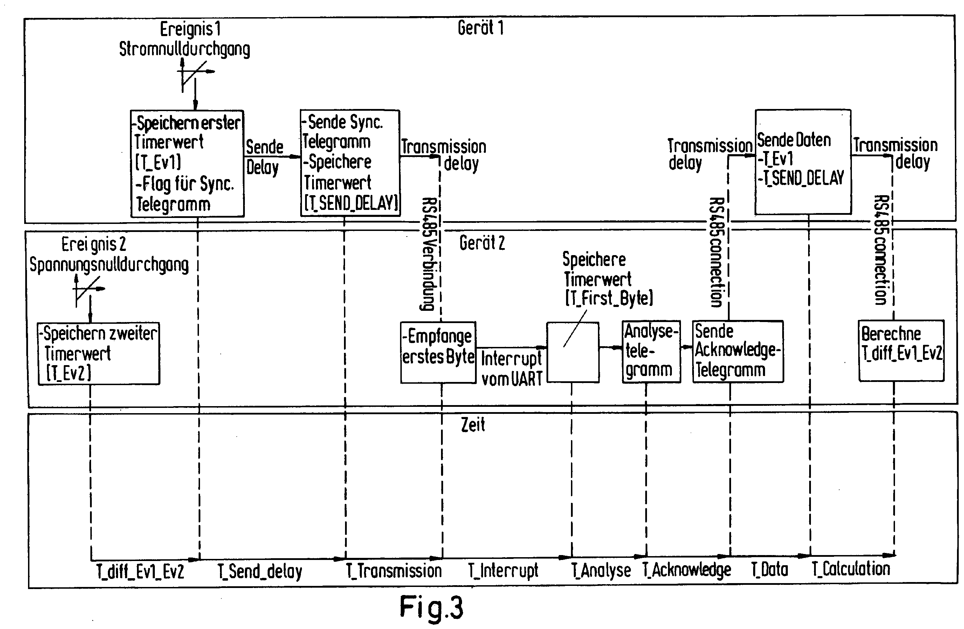

Die Figuren 2 und 3 zeigen, in unterschiedlichen Detaillierungsstufen, den prinzipiellen Verfahrensablauf des erfindungsgemäßen Verfahrens zur Ermittlung der Zeitdifferenz zwischen dem ersten Ereignis Ev1 in dem ersten Gerät und dem zweiten Ereignis Ev2 in dem zweiten Gerät.

Mit Hilfe des erfindungsgemäßen Verfahrens können die beiden Ereignisse, welche in voneinander unabhängigen Geräten stattfinden, über die serielle Schnittstelle synchronisiert werden.

Beide Geräte arbeiten asynchron zueinander. Mit Hilfe eines speziellen Telegrammaustausches werden die Ereignisse miteinander synchronisiert.

Mit Bezug zur Figur 2 und 3 wird dieser Telegrammaustausch im Folgenden erläutert. Für den konkreten Beispielfall der Ermittlung des Phasenwinkels zwischen Strom und Spannung gelten folgende Korrelationen:
Das erste Gerät ist der Universal Motor Controller UMC mit Strommessung; das zweite Gerät ist das Spannungsmessmodul; das erste Ereignis ist der Stromnulldurchgang; das zweite Ereignis ist der Spannungsnulldurchgang.

Die Telegramme "Sync-Telegram" 4 und "Acknowledge-Telegram" 6 sind vordefiniert und werden nicht verändert. Sie dienen ausschließlich zur Definition jeweils eines festen Zeitpunktes, durch welchen die Synchronisation von Ereignis 1 (Nulldurchgang des Stromsignals, Ev1) und Ereignis 2 (Nulldurchgang des Spannungssignals, Ev2) ermöglicht wird.

Die Telegramme "DataTelegram" 7 und "Result-Telegram" 8 enthalten Zeitstempel und den berechneten Zeitversatz der Ereignisse 1 und 2.

Die serielle Datenübertragung ist unabhängig von und daher asynchron zu den Ereignissen 1 und 2.

Die Synchronisation der Ereignisse 1 und 2 (Ev1, Ev2) erfolgt nach folgendem Schema:

- In beiden Geräten laufen unabhängige Timer mit konstanten Zeitbasen.

- Tritt ein Ereignis in den Geräten auf, wird der Wert des Timers des jeweiligen Gerätes in einer Variablen gespeichert.

Bei Auftreten von Ereignis 2 im Gerät 2 wird der zugehörige Wert des Timers des zweiten Gerätes in einer Variablen T_Ev2_timebase_dev2 gespeichert.

Bei Auftreten von Ereignis 1 im Gerät 1 wird der zugehörige Wert des Timers des ersten Gerätes in einer Variablen T_Ev1_timebase_dev1 gespeichert.

- Nachdem im Gerät 1 das Ereignis 1 erfasst wurde, wird die Task für die serielle Kommunikation angestoßen.

Da die serielle Kommunikation asynchron zu dem Ereignis 1 läuft, kann nicht vorausgesagt werden, wann das Telegramm gesendet wird.

- Wird nun in dem Gerät 1 das Sync-Telegramm 7 an die serielle Kommunikationsschnittstelle 5, realisiert durch einen im Allgemeinen als Universal Asynchronous Receiver Transmitter, kurz UART, bezeichneten Funktionsbaustein, übergeben, wird wieder der zugehörige Wert des Timers des ersten Gerätes in einer Variablen gespeichert, in der Variablen T_Send_Delay_timebase_dev1.

- Wird in dem Gerät 2 das erste Byte einer serielle Kommunikation empfangen, so wird der zugehörige Wert des Timers des zweiten Gerätes in einer Variablen gespeichert, die als T_first_byte_time_base_dev2 bezeichnet wird.

- Nach dem vollständigen Empfang des Sync-Telegramms 4 wird ein Acknowledge-Telegramm 6 gesendet, damit das Gerät 1 weiß, dass die Datenübertragung fehlerfrei war.

- Nachdem das Gerät 1 das Acknowledge-Telegramm 6 empfangen hat, sendet es an das Gerät 2 ein Datentelegramm mit folgendem Inhalt:

  ◦ T_Ev1_timebase_dev1

  ◦ T_Send_Delay_timebase_dev1

- Das Gerät 2 weiß damit die Zeitbasis des Timers1 des Gerätes 1 und kann somit die Daten im empfangenen Datentelegramm auf seine eigene Zeitbasis umrechnen.

Dies hat den Vorteil, dass beide Geräte mit unterschiedlichen Taktgebern arbeiten können:

- T_Ev1_timebase_dev1 -> T_Ev1_timebase_dev2

- T_Send_Delay_timebase_dev1 -> T_Send_Delay_timebase_dev2

- Der Zeitversatz durch die Busübertragung kann mit Hilfe der Baudrate der seriellen Schnittstelle berechnet oder messtechnisch ermittelt werden und ist damit bekannt. Somit erhält man die Konstante T_transmission_delay_timebase_dev2.

- Auch der Zeitversatz durch die Interruptzeiten des UART-Bausteines des Gerätes 2, können berechnet oder messtechnisch ermittelt werden und sind damit bekannt. Somit erhält man die Konstante T_interrupt_delay_timebase_dev2.

- Mit Hilfe der oben genannten Konstanten und der im Daten-Telegramm übermittelten Werte kann nun der Zeitversatz zwischen den Ereignissen 1 und 2 berechnet werden, nach folgendem Zusammmenhang:

$$T_{Diff\_Ev1\_Ev2} = \left[ T_{First\_Byte} - \left( \left( T_{Send\_Delay} - T_{Ev1} \right) + T_{Transmission} + T_{Interrupt} \right) \right] - T_{Ev2}$$

Bei dem Verfahren muss darauf geachtet werden, dass mindestens ein Synchronisationszyklus innerhalb der Laufzeit der Timer stattfindet, da sonst wegen des Überlaufs der Timer der Zeitbezug nicht mehr hergestellt werden kann.
Ein weiterer Vorteil des erfindungsgemäßen Verfahrens liegt darin, dass unmittelbar nach jedem Ereignis, also hier im Beispiel nach jedem erfassten Nulldurchgang, das Synchronisationsverfahren von neuem beginnt. Es kann sich somit kein Zeitfehler aufaddieren. Bei bekannten Verfahren, bei denen die Timer zu bestimmten Zeiten nur miteinander synchronisiert werden, kann sich dagegen zwischen den jeweiligen Timer-Synchronisationszeiten ein Zeitfehler aufaddieren. Dieser Zeitfehler lässt sich nur dadurch minimieren, dass bei den bekannten Verfahren die Zeit zwischen den einzelnen Synchronisationsvorgängen verringert wird. Doch dann wird die Kommunikationsverbindung durch die Synchronisation sehr stark belastet und die eigentliche Datenübertragung zu langsam. Das erfindungsgemäße Verfahren vermeidet diesen Nachteil und ist zudem noch einfach und kostengünstig durchführbar, da auf preiswerte Standardbausteine, wie beispielsweise einen Standard-UART, zurückgegriffen werden kann.

Bezugszeichenliste

| 1 | erstes Gerät |
|---|---|
| 2 | zweites Gerät |
| 3 | serielle Kommunikationsverbindung |
| 4 | Synchronisationstelegramm |
| 5 | Kommunikationsschnittstelle |
| 6 | Acknowledge-Telegramm |
| 7 | Data-Telegramm |
| 8 | Result-Telegramm |
| T_Diff_Ev1_Ev2 | Zeitdifferenz |
| Ev1 | erstes Ereignis |
| Ev2 | zweites Ereignis |
| T_Ev2 | erste Zeit |
| T_Ev2_timebase_dev2 | zweiter Ereignis-Timer-Wert |
| T_Ev1_timebase_dev1 | erster Ereignis-Timer-Wert |
| T_first_byte | zweite Zeit |
| T_first_byte_time-base_dev2 | Empfangs-Timer-Wert |
| T_runtime | Verzögerungszeit |
| T_Send_delay_timebase_dev1 | erster Verzögerungs-Timer-Wert |

T_transmission_delay_ timebase_dev2    Zeitversatz aufgrund Telegrammübertragung
T_interrupt_delay_timebase_dev2    Zeitversatzes aufgrund der Interrupt-Zeit der Kommunikationsschnittstelle

**Patentansprüche**

1. Verfahren zur Ermittlung der Zeitdifferenz (T_Diff_Ev1_Ev2) zwischen einem ersten Ereignis (Ev1), das in oder von einem ersten Gerät (1) erfasst wird, und einem zweiten Ereignis (Ev2), das in oder von einem zweiten Gerät (2) erfasst wird, wobei das erste Gerät (1) einen ersten Timer mit einer ersten Zeitbasis hat, wobei das zweite Gerät (2) einen zweiten Timer mit einer zweiten Zeitbasis hat, wobei der erste und der zweite Timer zueinander asynchron laufen, und wobei das erste und das zweite Gerät (1, 2) über eine serielle Kommunikationsverbindung (3) miteinander verbunden sind, **dadurch gekennzeichnet, dass** in dem zweiten Gerät (2) eine erste Zeit (T_Ev2) des Auftretens des zweiten Ereignisses (Ev2), bezogen auf die zweite Zeitbasis, erfasst und gespeichert wird, dass in dem ersten Gerät (1) ein Synchronisationstelegramm (4) erzeugt wird, wenn in oder von dem ersten Gerät (1) das erste Ereignis (Ev1) erfasst wird, und dass das Synchronisationstelegramm (4) über die serielle Kommunikationsverbindung (3) an das zweite Gerät (2) gesendet wird,

   - dass in dem zweiten Gerät (2) eine zweite Zeit (T_first_byte) des Eintreffens des Synchronisationstelegramms (4) in dem zweiten Gerät (2), bezogen auf die zweite Zeitbasis, erfasst und gespeichert wird, dass die Zeitdifferenz zwischen dem ersten und dem zweiten Ereignis (T_Diff_Ev1_Ev2) aus der Differenz zwischen der zweiten Zeit (T_first_byte_time_base_dev2) und der ersten Zeit (T_Ev2_timebase_dev2), unter Berücksichtigung der Verzögerungszeit (T_runtime), die zwischen dem Erzeugen des Synchronisationstelegramms (4) in dem ersten Gerät (1) und dem Erfassen des Eintreffens des Synchronisationstelegramms (4) in dem zweiten Gerät (2) entsteht, ermittelt wird.

2. Verfahren nach Anspruch 1, **dadurch gekennzeichnet, dass** dem ersten Ereignis (Ev1) in dem ersten Gerät (1) ein erster Ereignis-Timerwert (T_Ev1_timebase_dev1), bezogen auf die Zeitbasis des ersten Gerätes, zugeordnet und gespeichert wird, dass dem zweiten Ereignis (Ev2) in dem zweiten Gerät (2) ein zweiter Ereignis-Timerwert (T_Ev2_timebase_dev2), bezogen auf die Zeitbasis des zweiten Gerätes (2), zugeordnet und gespeichert wird, dass beide Ereignisse (Ev1, Ev2) durch Austausch des Synchronisationstelegramms (4) zwischen den beiden Geräten (1, 2) über die Kommunikationsverbindung (3) synchronisiert werden, und dass die Zeitdifferenz (T_Diff_Ev1_Ev2) zwischen den beiden Ereignissen (Ev1, Ev2) unter Verwendung der beiden Ereignis-Timerwerte (T_Ev1_timebase_dev1, T_Ev2_timebase_dev2) ermittelt wird.

3. Verfahren nach Anspruch 2, wobei bei Auftreten des ersten Ereignisses (Ev1) die Übertragung des Synchronisationstelegramms (4) von dem ersten an das zweite Gerät (1, 2) initiiert wird, wobei die Laufzeit des Synchronisationstelegramms bis zu dessen Empfang in dem zweiten Gerät ermittelt wird und diese die Verzögerungszeit (T_runtime) darstellt, wobei bei Empfang des Synchronisationstelegramms in dem zweiten Gerät der zugehörige Empfangs-Timerwert (T_first_byte_time_base_dev2) ermittelt und gespeichert wird, wobei die Zeitdifferenz zwischen den beiden Ereignissen (T_Diff_Ev1_Ev2) aus der Differenz zwischen dem Empfangs-Timerwert (T_first_byte_time_base_dev2) einerseits und der Summe aus dem zweiten Ereignis-Timerwert (T_Ev2_timebase_dev2) und der Verzögerungszeit (T_runtime) andererseits ermittelt wird.

4. Verfahren nach Anspruch 3, wobei bei Übergabe des Synchronisationstelegramms (4) an die Kommunikationsschnittstelle (5) in dem ersten Gerät (1) der erste Verzögerungs-Timerwert (T_Send_delay_timebase_dev1) ermittelt wird, und
   wobei die Verzögerungszeit (T_runtime) aus der Summe des ersten Verzögerungs-Timerwerts (T_Send_delay_timebase_dev1) und dem Zeitversatz aufgrund der Telegrammübertragung (T_transmission_delay_timebase_dev2) sowie eines weiteren Zeitversatzes aufgrund der Interrupt-Zeit der Kommunikationsschnittstelle (T_interrupt_delay_timebase_dev2) ermittelt wird.

5. Verfahren nach einem der vorigen Ansprüche, wobei nach dem vollständigen Empfang des Synchronisationstelegramms in dem zweiten Gerät (2) ein Bestätigungstelegramm (6) an das erste Gerät (1) gesandt wird.

6. Verfahren nach Anspruch 5, wobei das erste Gerät (1) nach dem Empfang des Bestätigungstelegramms (6) an das zweite Gerät (2) ein Datentelegramm (7) schickt, welches den ersten Ereignis-Timerwert (T_Ev1_timebase_dev1) und den zweiten Verzögerungs-Timerwert (T_Send_delay_timebase_dev1) beinhaltet.

7. Verfahren nach Anspruch 6, wobei nach dem Empfang des Datentelegramms (7) in dem zweiten Gerät (2) die Zeitdifferenz (T_Diff_Ev1_Ev2) ermittelt wird.

8. Verfahren zur Ermittlung des Phasenwinkels zwischen Strom und Spannung in einem Wechselstromkreis, wobei der Phasenwinkel aus der Zeitdifferenz zwischen den Nulldurchgängen des Strom- und Spannungssignals ermittelt wird, wobei die Messung des Stroms in einem Strommessgerät erfolgt, die Messung der Spannung in einem Spannungsmessgerät erfolgt, und Strom- und Spannungsmessgerät separate Geräte mit jeweils eigener, asynchron zueinander laufender Zeitbasis sind, die mit einer seriellen Kommunikationsschnittstelle verbunden sind, **dadurch gekennzeichnet, dass** das Verfahren die Verfahrensschritte nach einem der Ansprüche 1 bis 7 aufweist, wobei das erste Ereignis der Nulldurchgang des Stromsignals und das zweite Ereignis der Nulldurchgang des Spannungssignals ist.

9. System zur Ermittlung des Phasenwinkels zwischen Strom und Spannung in einem Wechselstromkreis, wobei das System umfasst

   - ein Strommessgerät (1) zur Erfassung des Nulldurchgangs des Stromes,
   - ein Spannungsmessgerät (2) zur Erfassung des Nulldurchgangs der Spannung, wobei beide Geräte separate Geräte mit jeweils eigener, asynchron zueinander laufender Zeitbasis und durch eine serielle Schnittstelle (3) miteinander verbunden sind, und wobei das System dazu eingerichtet ist, ein Verfahren nach einem der Ansprüche 1 bis 7 auszuführen, wobei das Strommessgerät (1) dem ersten Gerät und der Stromnulldurchgang dem ersten Ereignis (Ev1) entspricht, und wobei das Spannungsmessgerät (2) dem zweiten Gerät und der Spannungsnulldurchgang dem zweiten Ereignis (Ev2) entspricht.

10. System nach Anspruch 9, wobei das erste Gerät (1) zur Durchführung von dreiphasigen Stromnulldurchgangsmessungen und das zweite Gerät (2) zur Durchführung von dreiphasigen Spannungsnulldurchgangsmessungen eingerichtet sind.

11. Computerprogramm mit Programmcode zur Durchführung der Verfahrensschritte des Verfahrens nach einem der Ansprüche 1 bis 7 oder 8, wenn das Computerprogramm auf einem Computer oder einer elektronischen Schaltung ausgeführt wird.

**Claims**

1. Method for ascertaining the time difference (T_Diff_Ev1_Ev2) between a first event (Ev1), detected in or by a first device (1), and a second event (Ev2), detected in or by a second device (2), wherein the first device (1) has a first timer having a first timebase, wherein the second device (2) has a second timer having a second time base, wherein the first and second timers run asynchronously with respect to one another, and wherein the first and second devices (1, 2) are connected to one another via a serial communication connection (3), **characterized in that** a first time (T_Ev2) of the occurrence of the second event (Ev2), referenced to the second timebase, is detected and stored in the second device (2), **in that** a synchronization message (4) is generated in the first device (1) when the first event (Ev1) is detected in or by the first device (1), and **in that** the synchronization message (4) is sent to the second device (2) via the serial communication connection (3),

   - **in that** a second time (T_first_byte) of the arrival of the synchronization message (4) in the second device (2), referenced to the second time base, is detected and stored in the second device (2), **in that** the time difference between the first and second events (T_Diff_Ev1_Ev2) is ascertained from the difference between the second time (T_first_byte_time_base_dev2) and the first time (T_Ev2_timebase_dev2), taking into consideration the delay (T_runtime) that arises between the generation of the synchronization message (4) in the first device (1) and the detection of the arrival of the synchronization message (4) in the second device (2).

2. Method according to Claim 1, **characterized in that** a first event timer value (T_Ev1_timebase_dev1), referenced to the timebase of the first device, is associated with the first event (Ev1) in the first device (1) and stored, **in that** a second event timer value (T_Ev2_timebase_dev2), referenced to the timebase of the second device (2), is associated with the second event (Ev2) in the second device (2) and stored, **in that** the two events (Ev1, Ev2) are synchronized by the exchange of the synchronization message (4) between the two devices (1, 2) via the communication connection (3), and **in that** the time difference (T_Diff_Ev1_Ev2) between the two events (Ev1, Ev2) is ascertained using the two event timer values (T_Ev1_timebase_dev1, T_Ev2_timebase_dev2).

**3.** Method according to Claim 2, wherein the occurrence of the first event (Ev1) results in the transmission of the synchronization message (4) from the first to the second device (1, 2) being initiated, wherein the delay in the synchronization message before it is received in the second device is ascertained and this represents the delay (T_runtime), wherein reception of the synchronization message in the second device results in the associated reception timer value (T_first_byte_time_base_dev2) being ascertained and stored, wherein the time difference between the two events (T_Diff_Ev1_Ev2) is ascertained from the difference between the reception timer value (T_first_byte_time_base_dev2), on the one hand, and the sum of the second event timer value (T_Ev2_timebase_dev2) and the delay (T_runtime), on the other hand.

**4.** Method according to Claim 3, wherein transfer of the synchronization message (4) to the communication interface (5) results in the first delay timer value (T_Send_delay_timebase_dev1) being ascertained in the first device (1), and wherein the delay (T_runtime) is ascertained from the sum of the first delay timer value (T_Send_delay_timebase_dev1) and the time offset on the basis of the message transmission (T_transmission_delay_timebase_dev2) and also a further time offset on the basis of the interrupt time of the communication interface (T_interrupt_delay_timebase_dev2).

**5.** Method according to one of the preceding claims, wherein complete reception of the synchronization message in the second device (2) is followed by an acknowledgement message (6) being sent to the first device (1).

**6.** Method according to Claim 5, wherein the first device (1), after receiving the acknowledgement message (6), sends the second device (2) a data message (7) containing the first event timer value (T_Ev1_timebase_dev1) and the second delay timer value (T_Send_delay_timebase_dev1).

**7.** Method according to Claim 6, wherein reception of the data message (7) in the second device (2) is followed by the time difference (T_Diff_Ev1_Ev2) being ascertained.

**8.** Method for ascertaining the phase angle between current and voltage in an AC circuit, wherein the phase angle is ascertained from the time difference between the zero crossings of the current and voltage signals, wherein the current is measured in an ammeter, the voltage is measured in a voltmeter, and the ammeter and the voltmeter are separate devices, each having a separate timebase running asynchronously with respect to one another, that are connected to a serial communication interface, **characterized in that** the method has the method steps according to one of Claims 1 to 7, the first event being the zero crossing of the current signal and the second event being the zero crossing of the voltage signal.

**9.** System for ascertaining the phase angle between current and voltage in an AC circuit, wherein the system comprises

- an ammeter (1) for detecting the zero crossing of the current,
- a voltmeter (2) for detecting the zero crossing of the voltage,
- wherein the two devices are separate devices, each having a separate timebase running asynchronously with respect to one another, and are connected to one another by a serial interface (3), and wherein the system is set up to perform a method according to one of Claims 1 to 7, wherein the ammeter (1) is consistent with the first device and the current zero crossing is consistent with the first event (Ev1), and wherein the voltmeter (2) is consistent with the second device and the voltage zero crossing is consistent with the second event (Ev2).

**10.** System according to Claim 9, wherein the first device (1) is set up for performing three-phase current zero crossing measurements and the second device (2) is set up for performing three-phase voltage zero crossing measurements.

**11.** Computer program having program code for performing the method steps of the method according to one of Claims 1 to 7 or 8 when the computer program is executed on a computer or an electronic circuit.

## Revendications

**1.** Procédé pour déterminer la différence de temps (T_Diff_Evl_Ev2) entre un premier événement (Ev1), qui est détecté dans ou par un premier appareil (1), et un deuxième événement (Ev2), qui est détecté dans ou par un deuxième appareil (2), le premier appareil (1) possédant un premier temporisateur ayant une première base de temps, le deuxième appareil (2) possédant un deuxième temporisateur ayant une deuxième base de temps, le premier et le deuxième temporisateur fonctionnant de manière asynchrone l'un par rapport à l'autre, et le premier et le deuxième appareil (1, 2) étant reliés l'un à l'autre par le biais d'une liaison de communication série (3), **caractérisé en ce qu'**un premier instant (T_Ev2) de la survenance du deuxième événement (Ev2), rapporté à la deuxième base de temps, est détecté et enregistré dans le deuxième appareil (2) **en ce qu'**un télégramme de synchronisation (4) est généré dans le premier appareil (1) lorsque le premier événement (Ev1) est détecté dans ou par le premier appareil (1), et **en ce que** le télégramme de synchronisation (4) est envoyé au deuxième appareil (2) par le biais de la liaison de communication série (3),

- **en ce qu'**un deuxième instant (T_first_byte) de l'arrivée du télégramme de synchronisation (4) dans le deuxième appareil (2), rapporté à la deuxième base de temps, est détecté et enregistré dans le deuxième appareil (2), **en ce que** la différence de temps entre le premier et le deuxième événement (T_Diff_Evl_Ev2) est déterminée à partir de la différence entre le deuxième instant (T_first_byte_time_base_dev2) et le premier instant (T_Ev2_timebase_dev2), en tenant compte du temps de retard (T_runtime) qui se produit entre la génération du télégramme de synchronisation (4) dans le premier appareil (1) et la détection de l'arrivée du télégramme de synchronisation (4) dans le deuxième appareil (2).

2. Procédé selon la revendication 1, **caractérisé en ce qu'**une première valeur de temporisateur d'événement (T_Ev1_timebase_dev1), rapportée à la base de temps du premier appareil, est associée au premier événement (Ev1) et enregistrée dans le premier appareil (1), **en ce qu'**une deuxième valeur de temporisateur d'événement (T_Ev2_timebase_dev2), rapportée à la base de temps du deuxième appareil (2), est associée au deuxième événement (Ev2) et enregistrée dans le deuxième appareil (2), **en ce que** les deux événements (Ev1, Ev2) sont synchronisés par échange du télégramme de synchronisation (4) entre les deux appareils (1, 2) par le biais de la liaison de communication (3), et **en ce que** la différence de temps (T_Diff_Evl_Ev2) entre les deux événements (Ev1, Ev2) est déterminée en utilisant les deux valeurs de temporisateur d'événement (T_Ev1_timebase_dev1, T_Ev2_timebase_dev2).

3. Procédé selon la revendication 2, la transmission du télégramme de synchronisation (4) du premier au deuxième appareil (1, 2) étant initiée lors de la survenance du premier événement (Ev1), le temps de propagation du télégramme de synchronisation jusqu'à sa réception dans le deuxième appareil étant déterminé et celui-ci représentant le temps de retard (T_runtime), la valeur de temporisateur de réception (T_first_byte_time_base_dev2) étant déterminée et enregistrée lors de la réception du télégramme de synchronisation dans le deuxième appareil, la différence de temps entre les deux événements (T_Diff_Evl_Ev2) étant déterminée à partir de la différence entre la valeur de temporisateur de réception (T_first_byte_time_base_dev2) d'un côté et la somme de la deuxième valeur de temporisateur d'événement (T_Ev2_timebase_dev2) et du temps de retard (T_runtime) de l'autre côté.

4. Procédé selon la revendication 3, la première valeur de temporisateur de retard (T_Send_delay_timebase_devl) étant déterminée dans le premier appareil (1) lors du transfert du télégramme de synchronisation (4) à l'interface de communication (5), et
le temps de retard (T_runtime) étant déterminé à partir de la somme de la première valeur de temporisateur de retard (T_Send_delay_timebase_dev1) et du décalage dans le temps en raison de la transmission du télégramme (T_transmission_delay_timebase_dev2) ainsi qu'un décalage dans le temps supplémentaire en raison du temps d'interruption de l'interface de communication (T_interrupt_delay_timebase_dev2).

5. Procédé selon l'une des revendications précédentes, un télégramme de confirmation (6) étant envoyé au premier appareil (1) après la réception complète du télégramme de synchronisation dans le deuxième appareil (2).

6. Procédé selon la revendication 5, le premier appareil (1), après la réception du télégramme de confirmation (6), envoyant au deuxième appareil (2) un télégramme de données (7) qui contient la première valeur de temporisateur d'événement (T_Ev1_timebase_dev1) et la deuxième valeur de temporisateur de retard (T_Send_delay_timebase_dev1).

7. Procédé selon la revendication 6, la différence de temps (T_Diff_Evl_Ev2) étant déterminée après la réception du télégramme de données (7) dans le deuxième appareil (2).

8. Procédé de détermination de l'angle de phase entre le courant et la tension dans un circuit de courant alternatif, l'angle de phase étant déterminé à partir de la différence de temps entre les passages par zéro du signal de courant et de tension, la mesure du courant étant réalisée dans un ampèremètre, la mesure de la tension étant réalisée dans un voltmètre, et l'ampèremètre et le voltmètre étant des appareils séparés ayant chacun une base de temps propre fonctionnant de manière asynchrone par rapport à l'autre et qui sont reliés avec une interface de communication série, **caractérisé en ce que** le procédé comprend les étapes du procédé selon l'une des revendications 1 à 7, le premier événement étant le passage par zéro du signal de courant et le deuxième événement le passage par zéro du signal de tension.

9. Système destiné à la détermination de l'angle de phase entre le courant et la tension dans un circuit de courant alternatif, le système comprenant

- un ampèremètre (1) destiné à détecter le passage par zéro du courant,
- un voltmètre (2) destiné à détecter le passage par zéro de la tension,

les deux appareils étant des appareils séparés ayant chacun une base de temps propre fonctionnant de manière asynchrone par rapport à l'autre et qui sont reliés entre eux par une interface série (3), et le système étant conçu pour mettre en oeuvre un procédé selon l'une des revendications 1 à 7, l'ampèremètre (1) correspondant au premier appareil et le passage par zéro du courant au premier événement (Ev1), et le voltmètre (2) correspondant au deuxième appareil et le passage par zéro de la tension au deuxième événement (Ev2).

10. Système selon la revendication 9, le premier appareil (1) étant conçu pour réaliser des mesures triphasées du passage par zéro du courant et le deuxième appareil (2) pour réaliser des mesures triphasées du passage par zéro de la tension.

11. Programme informatique, comprenant un code de programme servant à exécuter les étapes du procédé selon l'une des revendications 1 à 7 ou 8 lorsque le programme informatique est exécuté sur un ordinateur ou un circuit électronique.

Figur 1

Figur 2

EP 2 595 332 B1

**Gerät 1**

Ereignis 1
Stromnulldurchgang

-Speichern erster
Timerwert
[T_Ev1]
-Flag für Sync.
Telegramm

Sende
Delay

-Sende Sync.
Telegramm
-Speichere
Timerwert
[T_SEND_DELAY]

Transmission
delay

RS485 Verbindung

Transmission
delay

Sende Daten
-T_Ev1
-T_SEND_DELAY

Transmission
delay

RS485 connection

RS485 connection

**Gerät 2**

Ereignis 2
Spannungsnulldurchgang

-Speichern zweiter
Timerwert
[T_Ev2]

Speichere
Timerwert
[T_First_Byte]

-Empfange
erstes Byte

Interrupt
vom UART

Analysetelegramm

Sende
Acknowledge-
Telegramm

Berechne
T_diff_Ev1_Ev2

**Zeit**

T_diff_Ev1_Ev2 | T_Send_delay | T_Transmission | T_Interrupt | T_Analyse | T_Acknowledge | T_Data | T_Calculation

Fig.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2290776 A1